# EUROPÄISCHE PATENTSCHRIFT

(11) **EP 2 345 495 B1**
(45) Veröffentlichungstag und Bekanntmachung des Hinweises auf die Patenterteilung: **11.01.2017**
(21) Anmeldenummer: 11150548.3
(22) Anmeldetag: 11.01.2011
(51) Int. Cl.: B23B 31/26, B23Q 11/10

(54) **Vorrichtung zum Spannen eines Werkzeugs oder Werkstücks in einer Arbeitsspindel**
Device for clamping a tool or a workpiece to a working spindle
Dispositif de serrage d'une pièce ou d'un outil sur une broche de travail

(30) Priorität: 15.01.2010 DE 102010004681
(43) Veröffentlichungstag der Anmeldung: 20.07.2011
(73) Patentinhaber: Ott-Jakob Spanntechnik GmbH, 87663 Lengenwang (DE)
(72) Erfinder: Greif, Josef, 87654, Friesenried (DE); Mohr, Peter, 87487, Wiggensbach (DE)
(74) Vertreter: Charrier Rapp & Liebau

(56) Entgegenhaltungen:
- DE-A1- 4 016 654
- DE-C1- 3 936 121
- DE-U1- 8 430 433
- US-B1- 7 287 941

## Beschreibung

Die Erfindung betrifft eine Vorrichtung zum Spannen eines Werkzeugs oder Werkstücks in einer drehbaren Arbeitsspindel nach dem Oberbegriff des Anspruchs 1.

Eine derartige Spannvorrichtung ist aus der DE 40 16 654 A1 bekannt. Diese enthält eine in einer Werkzeugmaschinenspindel unter Wirkung einer Federanordnung in Spannrichtung axial verschiebbare Zugstange, die an ihrem vorderen Ende eine Spannzange zum Eingriff mit einem Spannkonus eines Werkzeugs trägt. Die Zugstange wird zusammen mit der an ihrem vorderen Ende angeordneten Spannzange durch eine Federanordnung nach hinten in eine zurückgezogene Spannstellung beaufschlagt und kann durch eine Löseeinheit zur Freigabe der Spannzange entgegen der Kraft der Spannfeder nach vorne in eine vorgeschobene Lösestellung verschoben werden. Innerhalb der Arbeitsspindel ist ferner eine Druckkammer angeordnet, die zur Beaufschlagung der Zugstange in Spannrichtung mittels eines innerhalb der Zugstange verlaufenden Kanals mit einem Druckfluid beaufschlagbar ist. Bei dieser bekannten Spannvorrichtung ist innerhalb der Zugstange lediglich ein Fluiddurchgang gebildet, über den das Druckfluid sowohl zur Druckkammer als auch zum Werkzeug geleitet wird. Eine unabhängige Kühlmittelzuführung und Veränderung der Einzugskraft ist daher nicht möglich.

Die DE 84 30433 U1 zeigt eine Bearbeitungsmaschine für Werkstücke, mit mindestens einer zum Antrieb von Werkzeugen vorgesehenen Arbeitsspindel, die mindestens einen axial verlaufenden Kanal, der von einer Zuführeinrichtung für ein Kühlmittel aus bis zu einem Aufnahmekegel der Arbeitsspindel verläuft, und wenigstens eine axial in der Arbeitsspindel verlaufende Zuleitung für ein Säuberungsmittel, vorzugsweise Druckluft, aufweist, die in einen Aufnahmeraum des Aufnahmekegels mündet. Die Zuleitung und der Kühlmittelkanal verlaufen vollständig getrennt voneinander im wesentlichen parallel zueinander in der Arbeitsspindel und der Kühlmittelkanal setzt sich innerhalb des Aufnahmekegels fort und mündet im Bereich der Stirnseite des Aufnahmekegels.

Aus der US 7,287,941 ist eine Spannvorrichtung zum Spannen eines Werkzeugs oder Werkstücks in einer drehbaren Arbeitsspindel bekannt, bei der die Zugstange pneumatisch zwischen einer zurückgezogenen Spannstellung und einer vorgeschobenen Lösestellung axial verschoben werden kann. Hierzu sind in der Arbeitsspindel mehrere mit der Zugstange verbundene Kolben vorgesehen, die durch Einleitung von Druckluft in zwischen der Arbeitsspindel und der Zugstange ausgebildete Hohlräume in axialer Richtung beidseitig bewegbar sind. Die Einzugskraft in der Spannstellung wird durch einen Verriegelungsmechanismus mit mehreren Kugeln bestimmt, die beim Zurückziehen der Zugstange aus Ausnehmungen in der Zugstange heraus in radialer Richtung in sich teilweise überlappenede radiale Bohrungen in der Werkzeugaufnahme der Arbeitsspindel und im Spannkonus des Werkzeughalters gedrückt werden und dort einrasten. In der Zugstange ist eine zentrale Bohrung zur Zufuhr von Kühlmittel zum Werkzeug vorgesehen. Eine Einstellung der Einzugskraft durch den Luftdruck ist nicht vorgesehen.

Aufgabe der Erfindung ist es, eine Vorrichtung der eingangs genannten Art zu schaffen, die eine von der Kühlmittelzufuhr unabhängige Veränderung der Einzugskraft von außen ermöglicht.

Diese Aufgabe wird durch eine Vorrichtung mit den Merkmalen des Anspruchs 1, gelöst. Zweckmäßige Ausgestaltungen und vorteilhafte Weiterbildungen der Erfindung sind in den Unteransprüchen angegeben.

Bei der erfindungsgemäßen Vorrichtung sind in der Spannstange neben dem für die Zuführung des Druckfluids vorgesehenen Kanal mindestens eine oder mehrere, vorzugsweise zwei weitere, von dem Kanal separate Längsbohrungen angeordnet, über die unabhängig von der Zuführung eines Druckfluids durch den Kanal ein Kühlschmiermittel zu einer zentralen Bohrung in einer mit dem vorderen Ende der Spannstange verbundenen Zugstange geleitet werden kann. Dadurch wird eine Kühlschmiermittelzufuhr und eine davon unabhängige Veränderung der durch die Spannfeder erzeugten Spann- oder Einzugskraft ermöglicht. Über das Druckfluid kann die durch die Spannfeder erzeugte Spann- und Einzugskraft bei Bedarf von außen erhöht werden. Da durch den innerhalb der Druckkammer mit Hilfe des Druckfluids erzeugten Druck die Kraft der Spannfeder in Spannrichtung unterstützt werden kann, muss die Spannfeder nicht so stark dimensioniert werden, so dass die entgegen der Spannfeder wirkende Lösekraft verringert werden kann. Dies stellt einen weiteren wesentlichen Vorteil der erfindungsgemäßen Vorrichtung dar.

In einer besonders zweckmäßigen Ausführung ist in der Arbeitsspindel eine Druckkammer vorgesehen, die durch einen in der Arbeitspindel axial festgelegten vorderen Anlagering und einen mit der Spannstange verbundenen hinteren Anlagering begrenzt wird. Diese Druckkammer kann gleichzeitig als Aufnahmekammer für die Spannfeder dienen, wodurch eine kompakte Bauweise ermöglicht wird

Der vordere Anlagering und der gegenüber der Arbeitsspindel verschiebbare hintere Anlagering sind vorzugsweise innerhalb einer Bohrung der Arbeitsspindel um die Spannstange angeordnet und durch innere und äußere Dichtungen gegenüber der Spannstange und der Arbeitspindel abgedichtet. Die Druckkammer zur Erhöhung der Spannkraft ist somit gut abgedichtet innerhalb der Arbeitsspindel integriert.

Zusätzlich oder anstelle der durch den vorderen und hinteren Anlagering begrenzten Druckkammer kann in der Arbeitsspindel eine weitere mit Druckfluid von außen beaufschlagbare Druckkammer vorgesehen sein, die z.B. durch einen in der Arbeitspindel axial festgelegten Zylinder und einen innerhalb des Zylinders verschiebbaren, mit der Spannstange verbundenen Ringkolben begrenzt wird.

Der hintere Anlagering und der Ringkolben wirken bei Beraufschlagung der beiden Druckammern als hintereinander geschaltete Kolben, welche die Spannfeder bei Druckbeaufschlagung unterstützen können und eine von außen steuerbare Erhöhung der Spannkraft ermöglichen.

Der Kanal ist in einer konstruktiv und fertigungstechnisch zweckmäßigen Ausführung als Längsbohrung innerhalb der Spannstange mit mindestens einer von der Längsbohrung abzweigenden, in die Druckkammer mündenden Querbohrung ausgeführt.

In einer weiteren zweckmäßigen Ausführung kann der hintere Anlagering über einen Übersetzungsmechanismus mit der Spannstange verbunden sein. Der Übersetzungsmechanismus kann durch einen in der Arbeitsspindel festgelegten Widerlagerring mit einer ersten Konusfläche, einen mit der Spannstange verbundenen Druckring mit einer zur ersten Konusfläche entgegengesetzt geneigten zweiten Konusfläche, eine auf der Spannstange axial verschiebbare Spannhülse mit einer dritten Konusfläche und mehrere um die Spannstange konzentrisch angeordnete Kugeln gebildet sein, die sich an den Konusflächen abstützen. Dadurch wird ein Keilgetriebe geschaffen, das eine Kraftübersetzung ermöglicht.

Weitere Besonderheiten und Vorzüge der Erfindung ergeben sich aus der folgenden Beschreibung bevorzugter Ausführungsbeispiele anhand der Zeichnung. Es zeigen:
- **Figur 1a, 1b**: eine Vorrichtung zum Spannen eines Werkzeugs in zwei unterschiedlichen Schnittansichten;
- **Figur 2**: eine Detailansicht der Vorrichtung von Figur 1 in einer Lösestellung und
- **Figur 3**: eine Detailansicht der Vorrichtung von Figur 1 in einer Spannstellung.

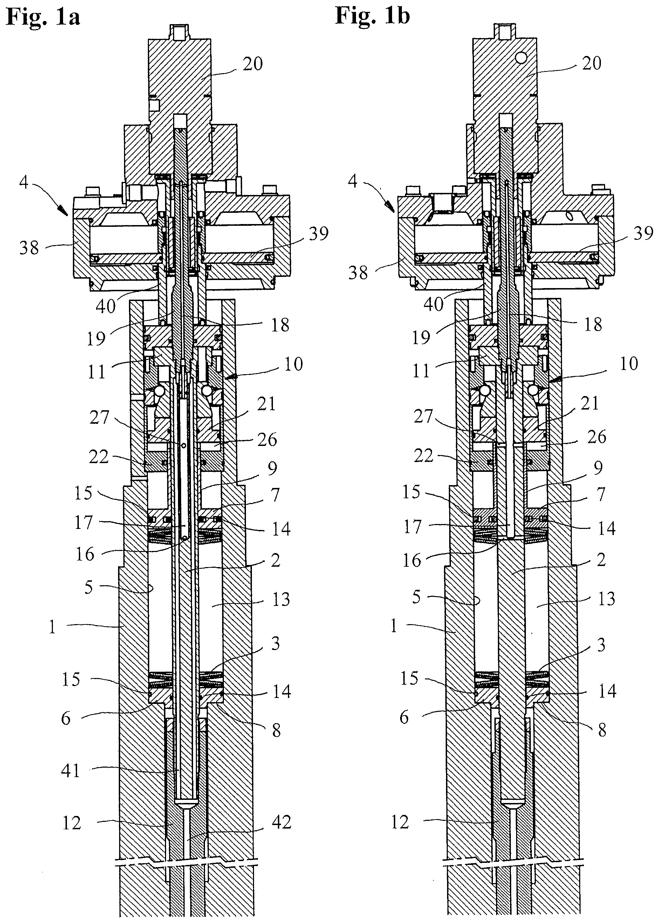

Die in den Figuren 1a und 1b in unterschiedlichen Schnittansichten dargestellte Vorrichtung zum Spannen eines Werkzeugs in einer motorisch drehbaren Arbeitsspindel 1 einer Werkzeugmaschine enthält eine innerhalb der Arbeitsspindel 1 verschiebbar angeordnete Spannstange 2, die durch eine innerhalb Arbeitsspindel 1 um die Spannstange 2 angeordnete Spannfeder 3 in eine Spannrichtung beaufschlagt und durch eine Löseeinheit 4 entgegen der Kraft der Spannfeder 3 in eine Löserichtung verschiebbar ist. Die beim gezeigten Ausführungsbeispiel als Tellerfederpaket ausgebildete Spannfeder 3 ist zwischen einem innerhalb einer Bohrung 5 in der Arbeitsspindel 1 festgelegten vorderen Anlagering 6 und einem in der Bohrung 5 verschiebbaren hinteren Anlagering 7 eingespannt. Der um die Spannstange 2 angeordnete vordere Anlagering 6 ist an einem Ringabsatz 8 in der Bohrung 5 der Arbeitsspindel 1 abgestützt. Der ebenfalls um die Spannstange 2 angeordnete und innerhalb der Bohrung 5 verschiebbare hintere Anlagering 7 ist mit einem hinteren Ansatz 9 über einen im Folgenden noch näher erläuterten Übersetzungsmechanismus 10 mit dem hinteren Ringbund 11 der Spannstange 2 verbunden.

Die Spannstange 2 ist an ihrem vorderen Ende mit einer Zugstange 12 verbunden, die an ihrem vorderen Ende eine nicht dargestellte Spannzange eines an sich bekannten Spannmechanismus trägt. Wenn die Zugstange 12 durch die Spannfeder 3 über die Spannstange 2 in die Spannrichtung gedrückt und dadurch die Zugstange 12 in die Arbeitsspindel 2 eingezogen wird, kann durch die am vorderen Ende der Zugstange 12 angeordnete Spannzange ein Spannkonus einer Werkzeugaufnahme oder eines Werkzeugs innerhalb der Arbeitsspindel 1 geklemmt werden. Wird dagegen die Zugstange 12 über die Spannstange 2 durch die Löseeinheit 4 entgegen der Kraft der Spannfeder 4 in eine vorgeschobene Stellung in Löserichtung verschoben, gibt die Spannzange den Spannkonus einer Werkzeugaufnahme oder eines Werkzeugs zum Werkzeugwechsel frei. Zum Aufbau und zur Funktionsweise eines solchen Spannmechanismus wird auf die DE 39 36 121 C1 verwiesen, deren Offenbarungsgehalt bezüglich des Spannmechanismus zum Gegenstand der vorliegenden Anmeldung gemacht wird.

Wie aus Figur 1 hervorgeht, wird durch den vorderen und hinteren Anlagering 6 bzw. 7 innerhalb der Bohrung 5 der Arbeitsspindel 1 eine vordere erste Druckkammer 13 begrenzt. Hierzu sind der vordere und hintere Anlagering 6 und 7 durch innere und äußere Dichtungen 14 bzw. 15 gegenüber der Spannstange 2 und der Arbeitsspindel 1 abgedichtet. Die vordere Druckkammer 13 ist über eine vordere erste Querbohrung 16 und eine Längsbohrung 17 in der Spannstange 2 sowie über eine Längsbohrung 18 in einer mit der Spannstange 2 verschraubten Anschlusstange 19 mit einer am hinteren Ende der Löseeinheit 4 befestigten Drehdurchführung 20 verbunden. Über die Drehdurchführung 20, die Längsbohrung 18 in der Anschlusstange 19 und die Längsbohrung 17 in der Spannstange 2 kann ein Druckfluid durch die erste Querbohrung 16 in die vordere Druckkammer 13 eingeleitet und dadurch der auf den hinteren Anlagering 7 wirkende Druck von außen erhöht werden.

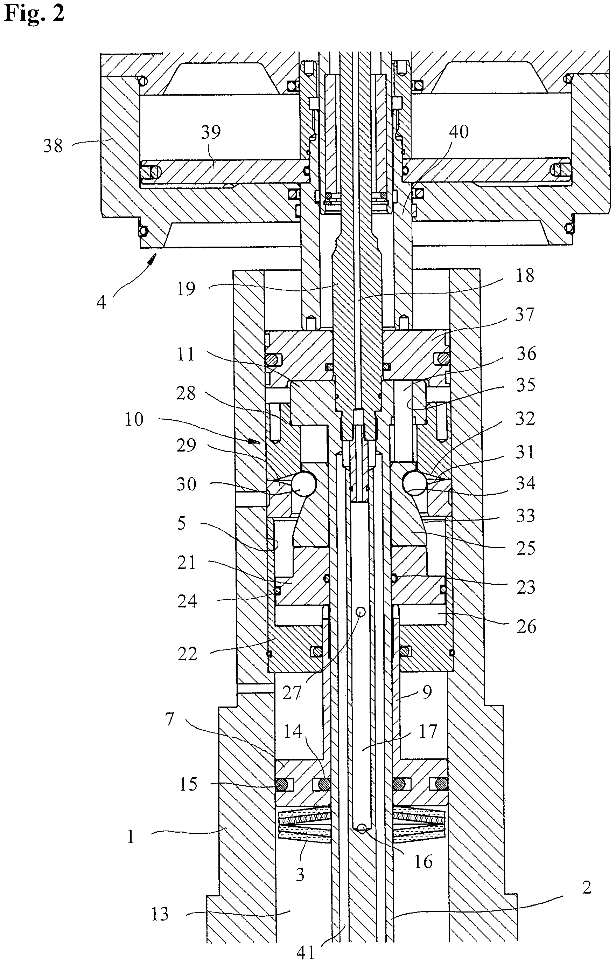

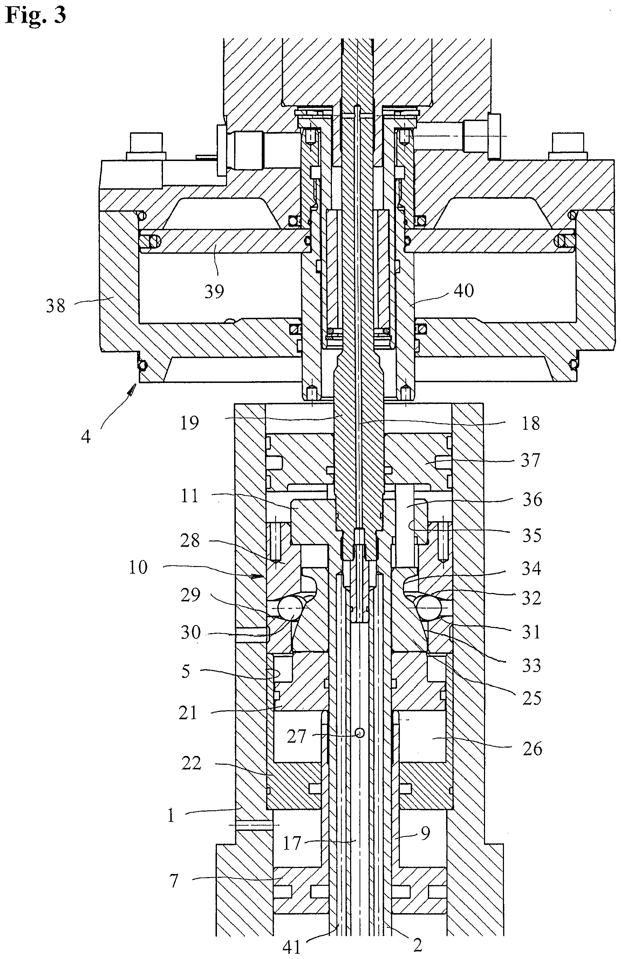

Aus den vergrößerten Teilansichten der Figuren 2 und 3 geht hervor, dass der hintere Anlagering 7 über seinen hinteren Ansatz 9 in Eingriff steht mit einem auf der Spannstange 2 angeordneten Ringkolben 21, der innerhalb eines in der Arbeitspindel 1 festgelegten Zylinders 22 verschiebbar geführt ist. Von dem gegenüber der Spannstange 2 und dem Zylinder 22 durch innere und äußere Dichtungen 23 bzw. 24 abgedichteten Ringkolben 21 und dem Zylinder 22 wird zwischen der in Figur 2 unten angeordneten vorderen Stirnfläche des Ringkolbens und einer inneren Stirnwand des Zylinders 22 eine zweite hintere Druckkammer 26 begrenzt. Die hintere Druckkammer 26 ist über eine von der Längsbohrung 17 in der Spannstange 2 abzweigende zweite hintere Querbohrung 27 und die Längsbohrung 18 in der mit der Spannstange 2 verschraubten Anschlusstange 19 mit der Drehdurchführung 20 verbunden. Wenn über die Drehdurchführung 20 die vordere Druckkammer 13 mit Druckfluid beaufschlagt wird, wird somit auch die zweite Druckkammer 26 mit Druckfluid versorgt.

Der zwischen dem Ringkolben 21 und dem Ringbund 11 der Spannstange 2 angeordnete Übersetzungsmechanismus 10 ist ein Keilgetriebe mit einer auf der Spannstange 2 axial verschiebbaren Spannhülse 25, einem mit der Spannstange 2 über deren Ringbund 11 verbundenen Druckring 28, einem in der Bohrung 5 der Arbeitsspindel 1 festgelegten Widerlagerring 29 und mehreren um die Spannstange 2 konzentrisch angeordneten Kugeln 30, die sich an jeweils drei Konusflächen 31, 32 und 33 abstützen. Die erste Konusfläche 31 ist an der hinteren Stirnseite des in der Bohrung 5 der Arbeitsspindel 1 festgelegten Widerlagerrings 29 vorgesehen. Die zur ersten Konusfläche 31 entgegengesetzt geneigte zweite Konusfläche 32 ist an der vorderen Stirnseite des am Ringbund 11 der Spannstange 2 angeordneten und innerhalb der Bohrung 5 verschiebbaren Druckring 28 vorgesehen. Die dritte Konusfläche 33 befindet sich an der Außenseite der Spannhülse 25. Die Spannhülse 25, die an der in Figur 2 oben liegenden hinteren Stirnseite des Ringkolbens 21 anliegt, weist an der Außenseite ferner eine Parkrille 34 für die Kugeln 30 auf.

Wie aus Figur 2 hervorgeht, enthält der Ringbund 11 der Spannstange 2 mehrere Axialbohrungen 35 mit darin verschiebbaren Druckbolzen 36, welche einerseits an der Spannhülse 25 und andrerseits an einem in der Bohrung 5 der Arbeitsspindel 1 verschiebbaren Kolben 37 anliegen. Die Löseeinheit 4 enthält einen in einem Zylinder 38 verschiebbaren Kolben 39, der über eine Druckhülse 40 mit dem Kolben 37 zu dessen Verschiebung zusammenwirkt. Durch Druckbeaufschlagung des Kolbens 37 ist dieser aus einer in Figur 3 gezeigten Ausgangsstellung in eine in Figur 2 dargestellte Lösestellung verschiebbar. In der Spannstange 2 sind neben der für die Zuführung des Druckfluids zu den beiden Druckkammern 13 und 26 vorgesehenen zentralen Längsbohrung 17 zwei weitere Längsbohrungen 41 angeordnet, über die ein Kühlschmiermittels zu einer in Figur 1a gezeigten zentralen Bohrung 42 in der Zugstange 12 und von dort zu den Werkzeugen geleitet werden kann. Anstelle der beiden Längsbohrungen 41 können auch nur eine weitere Längsbohrung 41 oder mehr als zwei Längsbohrungen 41 vorgesehen sein.

Im Folgenden wird die Funktionsweise der vorstehend beschriebenen Vorrichtung anhand der Figuren 2 und 3 erläutert.

Bei der in Figur 3 dargestellten Spannstellung wird die Spannstange 2 von dem durch die Spannfeder 3 beaufschlagten hinteren Anlagering 7 über den Ringkolben 21 und den Übersetzungsmechanismus 10 in Spannrichtung, d.h. innerhalb der Arbeitsspindel 1 nach hinten in Richtung der in Figur 3 oben dargestellten Löseeinheit 4, gedrückt. Durch den Ringkolben 21, der am hinteren Ende des Ansatzes 9 des hinteren Anlagerings 7 anliegt, wird auch die Spannhülse 25 innerhalb der Arbeitspindel 1 nach hinten in Richtung der am hinteren Seite der Arbeitsspindel 1 angeordneten Löseeinheit 4 gedrückt. Die Spannhülse 25 drückt dabei mit ihrer Konusfläche 33 die Kugeln 30 radial nach außen in den sich keilförmig verjüngenden Ringspalt zwischen den Konusflächen 31 und 32 des Widerlagerrings 30 bzw. des Druckrings 28. Dadurch wird die Spannstange 2 von dem an ihrem Ringbund 11 anliegenden Druckring 28 innerhalb der Arbeitsspindel nach hinten in Spannrichtung gedrückt. Die von Ringkolben 21 auf die Spannhülse 25 wirkende Kraft wird durch die unterschiedlichen Winkel der Konusflächen 31, 32 und 33 mit einer Kraftübersetzung an die Spannstange 2 weitergegeben.

Durch Beaufschlagung der beiden Druckkammern 13 und 26 mit Druckfluid in der gemäß Figur 3 gezeigten Spannstellung kann der auf den Ringkolben 21 wirkende Druck von außen erhöht und dadurch die Spann- bzw. Einzugskraft vergrößert werden. Der in den Druckkammern 13 und 26 erzeugte Druck kann die Spannfeder 3 unterstützen.

Wird dagegen die Spannstange 2 von der Löseeinheit 4 in die in Figur 2 gezeigte Lösestellung verschoben, werden die beiden Druckkammern 13 und 26 drucklos gemacht. Zum Lösen der Spannvorrichtung verschiebt der mit Druck beaufschlagte Kolben 39 der Löseeinheit 4 über die Druckhülse 40 den Kolben 37 innerhalb der Arbeitsspindel 1 nach vorne von der Löseeinheit 4 weg. Der Kolben 37 drückt dabei über die Druckbolzen 36 die Spannhülse 25, den Ringkolben 21 und den hinteren Anlagering 7 entgegen der Kraft der Spannfeder 3 ebenfalls in Löserichtung nach vorne (in Figur 3 nach unten), wobei die Kugeln 30 in die Rastnut 34 gelangen. Mit weiterem Vorschub des Kolbens 39 gelangt dieser auch zur Anlage an dem Ringbund 11 der Spannstange 2 und schiebt dieser entgegen der Kraft der Spannfeder 3 in die vordere Lösestellung.

## Patentansprüche

1. Vorrichtung zum Spannen eines Werkzeugs oder Werkstücks in einer drehbaren Arbeitsspindel (1), insbesondere einer Werkzeugmaschine, mit einer innerhalb der Arbeitsspindel (1) verschiebbar angeordneten Spannstange (2), die durch eine innerhalb der Arbeitsspindel (1) um die Spannstange (2) angeordnete Spannfeder (3) nach hinten in eine Spannrichtung beaufschlagt und durch eine Löseeinheit (4) entgegen der Kraft der Spannfeder (3) nach vorne in eine Löserichtung verschiebbar ist, wobei innerhalb der Arbeitsspindel (1) mindestens eine Druckkammer (13, 26) angeordnet ist, die zur Beaufschlagung der Spannstange (2) in Spannrichtung mittels eines innerhalb der Spannstange (2) verlaufenden Kanals (16, 17, 27) mit einem Druckfluid beaufschlagbar ist, **dadurch gekennzeichnet, dass** in der Spannstange (2) neben dem für die Zuführung des Druckfluids vorgesehenen Kanal (16, 17, 27) mindestens eine oder mehrere, vorzugsweise zwei weitere, von dem Kanal (16, 17, 27) separate Längsbohrungen (41) angeordnet sind, über die unabhängig von der Zuführung eines Druckfluids durch den Kanal (16, 17, 27) ein Kühlschmiermittel zu einer zentralen Bohrung (42) in einer mit dem vorderen Ende der Spannstange (2) verbundenen Zugstange (12) geleitet werden kann.

2. Vorrichtung nach Anspruch 1, **dadurch gekennzeichnet, dass** die Arbeitsspindel (1) eine Druckkammer (13) enthält, die durch einen in der Arbeitspindel (1) axial festgelegten vorderen Anlagering (6) und einen mit der Spannstange (2) verbundenen hinteren Anlagering (7) begrenzt wird.

3. Vorrichtung nach Anspruch 2, **dadurch gekennzeichnet, dass** der vordere Anlagering (6) und der gegenüber der Arbeitsspindel (1) verschiebbare hintere Anlagering (7) innerhalb einer Bohrung (5) der Arbeitsspindel (1) um die Spannstange (2) angeordnet und durch innere und äußere Dichtungen (14, 15) gegenüber der Spannstange (2) und der Arbeitspindel (1) abgedichtet sind.

4. Vorrichtung nach Anspruch 2 oder 3, **dadurch gekennzeichnet, dass** in der durch den vorderen und hinteren Anlagering (6, 7) begrenzten Druckkammer (13) die Spannfeder (4) angeordnet ist.

5. Vorrichtung nach einem der Ansprüche 1 bis 4, **dadurch gekennzeichnet, dass** die Arbeitsspindel (1) eine Druckkammer (26) enthält, die durch einen in der Arbeitspindel (1) axial festgelegten Zylinder (22) und einen innerhalb des Zylinders (22) verschiebbaren, mit der Spannstange (2) verbundenen Ringkolben (21) begrenzt wird.

6. Vorrichtung nach einem der Ansprüche 1 bis 5, **dadurch gekennzeichnet, dass** der Kanal (16, 17, 27) zur Versorgung der mindestens einen Druckkammer (13, 26) mit Druckfluid eine Längsbohrung (17) innerhalb der Spannstange (2) und mindestens eine von der Längsbohrung (17) abzweigende, in die Druckkammer (13, 26) mündende Querbohrung (16, 27) umfasst.

7. Vorrichtung nach einem der Ansprüche 1 bis 6, **dadurch gekennzeichnet, dass** der Kanal (16, 17, 27) mit einer Drehdurchführung (10) verbunden ist.

8. Vorrichtung nach Anspruch 7, **dadurch gekennzeichnet, dass** der Kanal (16, 17, 27) über eine Längsbohrung (18) in einer mit der Spannstange (2) verschraubten Anschlussstange (19) mit der Drehdurchführung (10) verbunden ist.

9. Vorrichtung nach einem der Ansprüche 1 bis 8, **dadurch gekennzeichnet, dass** der hintere Anlagering (7) über einen Übersetzungsmechanismus (10) mit der Spannstange (2) verbunden ist.

10. Vorrichtung nach Anspruch 9, **dadurch gekennzeichnet, dass** der Übersetzungsmechanismus (10) einen in der Arbeitsspindel (1) festgelegten Widerlagerring (29) mit einer ersten Konusfläche (31), einen mit der Spannstange (2) verbundenen Druckring (28) mit einer zur ersten Konusfläche (31) entgegengesetzt geneigten zweiten Konusfläche (32), eine auf der Spannstange axial verschiebbare Spannhülse (25) mit einer dritten Konusfläche (33) und mehrere um die Spannstange (2) konzentrisch angeordnete Kugeln (30) enthält, die sich an den Konusflächen (31, 32, 33) abstützen.

## Claims

1. Device for clamping a tool or workpiece in a rotatable work spindle (1), in particular of a machine tool, having a tension rod (2) which is arranged slidably within the work spindle (1) and which is biased rearwardly in a clamping direction by a tension spring (3) arranged round the tension rod (2) within the work spindle (1) and which is slidable forwardly in a release direction by a release unit (4) against the force of the tension spring (3), wherein within the work spindle (1) is arranged at least one pressure chamber (13, 26) which can admit a hydraulic fluid to bias the tension rod (2) in the clamping direction by means of a channel (16, 17, 27) extending within the tension rod (2), **characterised in that** in the tension rod (2), in addition to the channel (16, 17, 27) provided for delivery of the hydraulic fluid, are arranged at least one or more, preferably two more, longitudinal bores (41) separate from the channel (16, 17, 27), via which bores (41), independently of the delivery of a hydraulic fluid through the channel (16, 17, 27), a cooling lubricant can be conducted to a central bore (42) in a pull rod (12) connected to the front end of the tension rod (2).

2. Device according to claim 1, **characterised in that** the work spindle (1) contains a pressure chamber (13) which is defined by a front contact ring (6) axially fixed in the work spindle (1) and a rear contact ring (7) connected to the tension rod (2).

3. Device according to claim 2, **characterised in that** the front contact ring (6) and the rear contact ring (7) which is slidable relative to the work spindle (1) are arranged round the tension rod (2) within a bore (5) in the work spindle (1) and sealed off from the tension rod (2) and work spindle (1) by inner and outer seals (14, 15).

4. Device according to claim 2 or 3, **characterised in that** in the pressure chamber (13) defined by the front and rear contact rings (6, 7) is arranged the tension spring (4).

5. Device according to one of claims 1 to 4, **characterised in that** the work spindle (1) contains a pressure chamber (26) which is defined by a cylinder (22) axially fixed in the work spindle (1) and a ring piston (21) slidable within the cylinder (22) and connected to the tension rod (2).

6. Device according to one of claims 1 to 5, **characterised in that** the channel (16, 17, 27) for supply of the at least one pressure chamber (13, 26) with hydraulic fluid comprises a longitudinal bore (17) within the tension rod (2) and at least one transverse bore (16, 27) branching off from the longitudinal bore (17) and leading into the pressure chamber (13, 26).

7. Device according to one of claims 1 to 6, **characterised in that** the channel (16, 17, 27) is connected to a rotary feedthrough (10).

8. Device according to claim 7, **characterised in that** the channel (16, 17, 27) is connected to the rotary feedthrough (10) by a longitudinal bore (18) in a connecting rod (19) screwed to the tension rod (2).

9. Device according to one of claims 1 to 8, **characterised in that** the rear contact ring (7) is connected to the tension rod (2) by a transmission mechanism (10).

10. Device according to claim 9, **characterised in that** the transmission mechanism (10) has a support ring (29) fixed in the work spindle (1) and having a first cone surface (31), a thrust ring (28) connected to the tension rod (2) and having a second cone surface (32) inclined in the opposite direction to the first cone surface (31), a clamping sleeve (25) axially slidable on the tension rod and having a third cone surface (33), and a plurality of balls (30) arranged concentrically round the tension rod (2) and supported on the cone surfaces (31, 32, 33).

## Revendications

1. Dispositif de serrage d'un outil ou d'une pièce dans une broche de travail (1) rotative, en particulier une machine-outil, avec une tige de serrage (2) agencée de manière mobile dans la broche de travail (1), qui est sollicitée par un ressort de serrage (3) agencé dans la broche de travail (1) autour de la tige de serrage (2) vers l'intérieur dans un sens de serrage et est mobile par une unité de desserrage (4) contre la force du ressort de serrage (3) vers l'avant dans un sens de desserrage, dans lequel au moins une chambre de pression (13, 26) est agencée dans la broche de travail (1), laquelle peut être sollicitée par un fluide de pression pour la sollicitation de la tige de serrage (2) dans le sens de serrage à l'aide d'un canal (16, 17, 27) s'étendant dans la tige de serrage (2), **caractérisé en ce qu'**au moins un ou plusieurs, de préférence deux autres, perçages longitudinaux (41) séparés du canal (16, 17, 27) sont agencés dans la tige de serrage (2) à côté du canal (16, 17, 27) prévu pour l'amenée du fluide de pression, par lesquels indépendamment de l'amenée d'un fluide de pression par le canal (16, 17, 27), un lubrifiant de refroidissement peut être guidé jusqu'à un perçage central (42) dans une tige de traction (12) reliée à l'extrémité avant de la tige de serrage (2).

2. Dispositif selon la revendication 1, **caractérisé en ce que** la broche de travail (1) contient une chambre de pression (13) qui est délimitée par un anneau d'appui avant (6) fixé axialement dans la broche de travail (1) et un anneau d'appui arrière (7) relié à la tige de serrage (2).

3. Dispositif selon la revendication 2, **caractérisé en ce que** l'anneau d'appui avant (6) et l'anneau d'appui arrière (7) mobiles par rapport à la broche de travail (1) sont agencés dans un perçage (5) de la broche de travail (1) autour de la tige de serrage (2) et sont rendus étanches par des garnitures intérieure et extérieure (14, 15) par rapport à la tige de serrage (2) et la broche de travail (1).

4. Dispositif selon la revendication 2 ou 3, **caractérisé en ce que** le ressort de serrage (4) est agencé dans la chambre de pression (13) délimitée par l'anneau d'appui (6, 7) avant et arrière.

5. Dispositif selon l'une quelconque des revendications 1 à 4, **caractérisé en ce que** la broche de travail (1) contient une chambre de pression (26) qui est délimitée par un cylindre (22) fixé axialement dans la broche de travail (1) et un piston annulaire (21) relié à la tige de serrage (2), mobile dans le cylindre (22).

6. Dispositif selon l'une quelconque des revendications 1 à 5, **caractérisé en ce que** le canal (16, 17, 27) comporte, pour la sollicitation de l'au moins une chambre de pression (13, 26) par du fluide de pression, un perçage longitudinal (17) dans la tige de serrage (2) et au moins un perçage transversal (16, 27) débouchant dans la chambre de pression (13, 26), divergeant du perçage longitudinal (17).

7. Dispositif selon l'une quelconque des revendications 1 à 6, **caractérisé en ce que** le canal (16, 17, 27) est relié à un passage rotatif (10).

8. Dispositif selon la revendication 7, **caractérisé en ce que** le canal (16, 17, 27) est relié par un perçage longitudinal (18) dans une tige de raccordement (19) vissée à la tige de serrage (2) au passage rotatif (10).

9. Dispositif selon l'une quelconque des revendications 1 à 8, **caractérisé en ce que** l'anneau d'appui arrière (7) est relié par un mécanisme de transmission (10) à la tige de serrage (2).

10. Dispositif selon la revendication 9, **caractérisé en ce que** le mécanisme de transmission (10) contient un anneau de contre-palier (29) fixé dans la broche de travail (1) avec une première surface de cône (31), un anneau de pression (28) relié à la tige de serrage (2) avec une deuxième surface de cône (32) inclinée à l'opposé de la première surface de cône (31), une douille de serrage (25) mobile axialement sur la tige de serrage avec une troisième surface de cône (33) et plusieurs billes (30) agencées concentriquement autour de la tige de serrage (2), qui s'appuient contre les surfaces de cône (31, 32, 33).
